# EUROPEAN PATENT APPLICATION

(11) **EP 0 547 996 A2**
(43) Date of publication of application: **23.06.1993**
(21) Application number: 92500151.3
(22) Date of filing: 18.11.1992
(51) Int. Cl.: F16B 12/50, A47B 47/00

(54) **Device for the assembly of elements intended to form cupboards and similar furniture items**

(30) Priority: 21.11.1991 ES 9103493 U
(71) Applicant: Mora Verges, Rosa Maria, E-08785 Vallbona d'Anoia (Barcelona) (ES)
(72) Inventor: Mora Verges, Rosa Maria, E-08785 Vallbona d'Anoia (Barcelona) (ES)
(74) Representative: Ponti Sales, Adelaida

(57) **Abstract**

It comprises an angular shape (1) whose faces (2,3) are provided with a number of protruding tabs (5) with longitudinal serrations (6) resembling an arrowhead and which are pressure-fitted into longitudinal grooves (15) provided along the edges of the panels (13,14) to be assembled, and is characterised in that prolongations in the form of wings (9,10,12), which decrease in thickness towards their free edge, project from the longitudinal edge of both faces (2,3) of the shape (1) as well as from the arris formed where said faces meet, said prolongations being pressed and flattened against the adjacent surface of the elements (13,14) to be assembled when the device is fitted.

A longitudinal groove (4) can be provided along the internal line formed where the two faces (2,3) of the shape (1) converge.

## Description

The present invention relates to a device for the assembly of elements intended to form cupboards and similar furniture items. In particular the device is designed to join panels or boards which meet at an angle.

The holder of the present invention is also holder of the Spanish Utility Model No 9000801 which refers to a device for assembling two panels or boards which meet at an angle. This device consists of an angle shape whose faces are provided with a number of protruding tabs provided with longitudinal serrations resembling an arrowhead, which are pressure-fitted into longitudinal grooves provided along the edges of the panels to be assembled. Furthermore, the faces of the shape are provided with a number of longitudinal projections along the free edges acting as positional stops for the edges of said panels.

In practice it has become clear that the longitudinal projections located along the free edges of the faces of the shape prevent it from being correctly fixed to the edges of the panels and increase the likelihood of accidental separation.

In addition the presence of said projections is the reason why one of the faces of the shape protrudes from the adjacent face of one of the assembled panels. Therefore, when several items of furniture or structures assembled using the device in question are to be placed next to each other, the projecting face of the shape described forms a gap between them, making it more difficult to fit the items of furniture or structures next to each another.

In order to find a solution to the inconveniences described, the device which forms the object of the present invention has been conceived, incorporating all of the advantages of the previous device in terms of assembling the elements which meet at an angle, and at the same time offering greater safety with regard to the immobility of the shape once fitted to the elements to be joined.

The device in question consists of an angular shape whose faces are provided with a number of protruding tabs with longitudinal serrations resembling an arrowhead which are pressure-fitted into longitudinal grooves provided along the edges of the panels to be joined. At least one of the faces of the shape has a number of longitudinal projections along its free edges, acting as positional stops for the edges of said panels. Starting from this known embodiment, the device is characterised in that prolongations in the form of wings, which decrease in thickness towards their free edges, project from the longitudinal edge of the two faces of the shape as well as from the arris formed where said faces meet. These wings are pressed and flattened against the adjacent surface of the elements to be joined when the device is fitted.

The wings which project from the arris formed where the faces of the shape meet and from the longitudinal edge of one of the faces thereof are coplanar relative to the outer surface of the elements joined by means of the device.

In order that the present invention be better understood, a number of drawings are enclosed, which represent only by way of example a practical embodiment of the device for the assembly of elements intended to form cupboards and similar items of furniture.

In said drawings,
figure 1 is a perspective view of the shape, separated from the elements to be assembled, figure 2 is a cross sectional view of the device assembled in its working position, and
figures 3 and 4 both represent details on a larger scale than that of figure 2 and with the shape separated from the elements to be joined.

Referring to the drawing, the device comprises a shape 1 made of aluminium, plastic or any other material which be used to obtain a shape of good rigidity, and which can deform to a certain extent to ensure that it fits the elements to be joined.

The shape comprises two faces 2 and 3 which meet at a dihedral angle and are provided with a groove 4 along the internal line formed where the two faces converge, said groove constituting one of the characteristics of the device.

Faces 2 and 3 are provided with a number of protruding longitudinal tabs 5 perpendicular to the respective faces and provided with a number of inclined serrations 6 in the form of an arrowhead, which constitute anchoring means.

One side of the free edge 7 of the face 3 is provided with a longitudinal projection 8 which projects from the surface of 3a of face 3. From the opposite side of the same edge 7 extends a prolongation resembling a slightly curved longitudinal wing 9 which decreases progressively in thickness towards its free edge.

Projecting from the arris formed where the two faces 2 and 3 of the shape meet is a prolongation in the form of a slightly curved longitudinal wing 10, which is coplanar with the outer surface 2a of face 2.

Along the edge 11 of the face 2 is prolongation resembling a slightly curved longitudinal wing 12 which decreases in thickness towards its free edge and which is coplanar with the edge 11. Said prolongation or wing 12 overhangs the surface 2b of the face 2 of the shape 1.

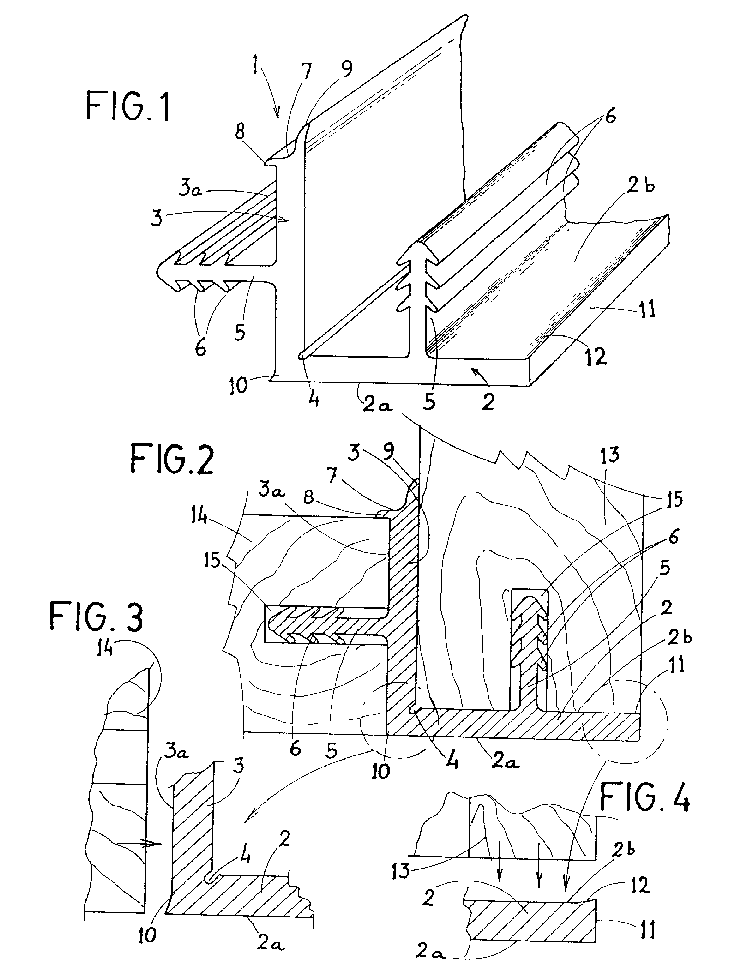

The shape described is designed to join two elements 13 and 14, in the form of panels or boards, in order to construct a cupboard or similar item of furniture, said elements meeting at an angle (figure 2) once assembled by means of the device disclosed.

Along their edges the elements 13 and 14 are each provided with longitudinal grooves 15 into which the tabs 5 are pressure-fitted, the inclined serrations allowing them to enter when pressure is applied but preventing them from coming out again, thereby ensuring that the elements 13 and 14 are assembled. The lateral projection 8 helps to keep the shape in position once it is fitted. All of this is the same as for the previously known device described in Spanish Utility Model U9000801.

The main difference between the known embodiment and the device which forms the object of the present invention lies in the presence of the protruding wings 9, 10, 12 and the groove 4 of the shape 1. In effect, when the tabs 5 are pressure-fitted in the grooves 15 of the elements 13 and 14 to join them at a dihedral angle, said wings deform and adapt totally to the faces of the respective elements, thereby increasing considerably the strength of the join between the shape and said elements. The groove 4 makes it easier for the two faces 2 and 3 of the shape to separate slightly such that when pressed it can fit against the edges of the elements 13, 14.

It is also important to emphasize that by removing one of the projections with which the known profile is provided, designed to center the position of one of the elements, the surface 2a of the face 2 of the shape which forms the object of the invention no longer adopts a protruding position relative to the outer surface of the element 13 (figure 2). In this way furniture or structures provided with the device of the invention can be placed laterally adjacent to each otherwithout the problem of gaps between them making it difficult to join them together.

The materials used to manufacture the parts of the device for the assembly of elements, the forms and dimensions thereof and all other details which may arise are independent of the object of the invention, providing they do not affect its basic principle.

## Claims

1. A device for the assembly of elements to form cupboards and similarfurniture items, comprising an angular shape (1) whose faces (2,3) are provided with a number of protruding tabs (5) with longitudinal serrations (6) resembling an arrowhead and which are pressure-fitted into longitudinal grooves (15) provided along the edges of the panels (13,14) to be assembled, characterised in that prolongations in the form of wings (9,10,12), which decrease in thickness towards their free edge, project from the longitudinal edge of both faces (2,3) of the shape (1) as well as from the arris formed where said faces meet, said prolongations being pressed and flattened against the adjacent surface of the elements (13,14) to be assembled when the device is fitted.

2. A device for the assembly of elements to form cupboards and similar furniture items according to claim 1, characterised in thatthe wings (10,12) which project from the arris formed where the faces of the shape (1) meet and from the longitudinal edge of one of the faces thereof are coplanar relative to the outer surface of the elements (13,14) assembled by means of the device.

3. A device for the assembly of elements to form cupboards and similar furniture items according to claim 1, characterised in that a longitudinal groove (4) is provided along the internal line formed where the two faces (2,3) of the shape (1) converge.
